# EUROPEAN PATENT SPECIFICATION

(11) **EP 3 964 316 B1**
(45) Date of publication and mention of the grant of the patent: **13.12.2023**
(21) Application number: 21193727.1
(22) Date of filing: 30.08.2021
(51) Int. Cl.: B23D 47/04, B27B 5/065, B27B 31/06

(54) **SAWING MACHINE FOR SAWING PIECES AND METHOD OF USING IT**
SÄGEMASCHINE ZUM SÄGEN VON WERKSTÜCKEN UND VERFAHREN ZU IHRER VERWENDUNG
MACHINE POUR SCIER DES PIÈCES ET SON PROCÉDÉ D'UTILISATION

(30) Priority: 07.09.2020 IT 202000021115
(43) Date of publication of application: 09.03.2022
(73) Proprietor: SCM Group S.p.A., 47921 Rimini (RN) (IT)
(72) Inventor: MANDOLESI, Stefano, 47921 RIMINI (IT); TONTINI, Gianluca, 47921 RIMINI (IT)
(74) Representative: Tiburzi, Andrea

(56) References cited:
- EP-A1- 2 574 433
- EP-A1- 2 832 507
- EP-A1- 3 461 607
- EP-A1- 3 685 976
- EP-A2- 1 057 599

## Description

The present invention relates to a sawing machine for sawing pieces.

These pieces can be panels made of different materials, such as wood, ceramic, plastic, metal, glass, fiberglass.

In particular, the present invention relates to the structure of a sawing machine designed to push at least a first piece and a second piece on a support plane along a forward direction, to cut at least said first piece or said first piece and said second piece along a cutting line (transversal to said forward direction), to divide each piece into at least a respective first part and a respective second part, and to push said first part of said first piece along a pushing direction (transverse to said forward direction), so as to move away from said first part from said guiding element.

In particular, the first piece is arranged on said support plane in such a way as to have at least a portion of a first lateral surface in contact with a guiding element, and the second piece is arranged on said support plane in such a way as to have at least a portion of a first side surface in contact with a second side surface of said first piece, opposite the first side surface of said first piece.

Said first part may be a waste part and said second part may be a remainder part or vice-versa, or both parts of said first part may be subjected to further machining, equal to or different from the cutting.

### Prior art

Currently, a known type sawing machine comprises a support plane SP for the workpieces, as well as a plurality of stations connected in series with each other: at least one loading station LS, at least one unloading station US, and at least one working station WS to perform a respective machining on one or more pieces.

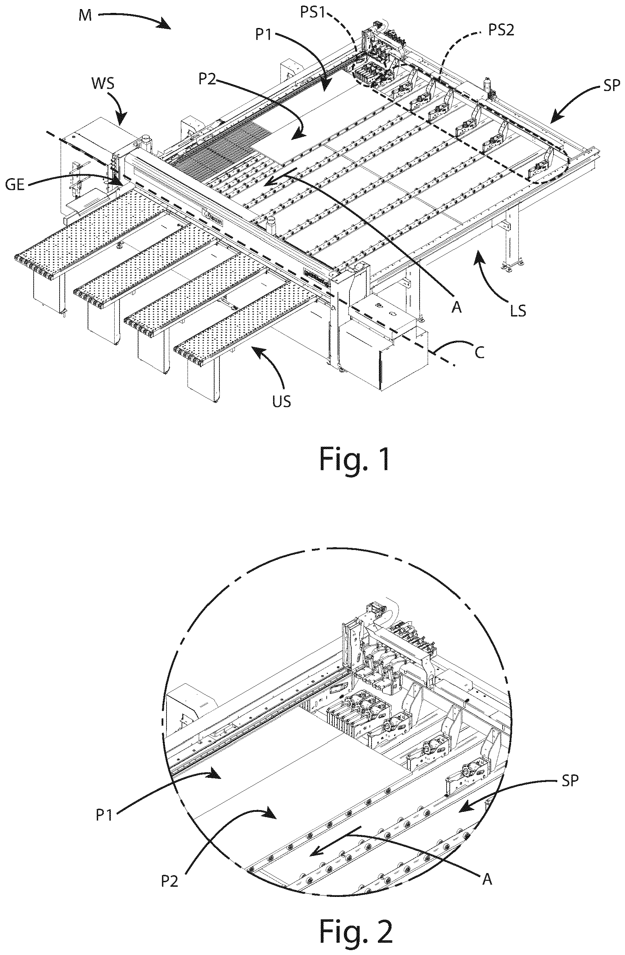

Figures 1 to 6 refer to a known type sawing machine.

Said known type of sawing machine comprises a loading station LS, an unloading station US, and a working station WS, arranged between said loading station LS and said unloading station US.

The workpieces advance on the support plane SP along a forward direction indicated by the arrow A by means of the push exerted by a pusher system.

Said pusher system is a system of movable arms, each of which is provided with a gripper for gripping a piece.

With reference to the known type of sawing machine described, the pieces to be machined are two pieces: a first piece P1 and a second piece P2, different from said first piece P1.

Said pusher system comprises a first group of pushers PS1 to push said first piece P1 and a second group of pushers PS2, different from said first group of pushers, to push at least said second piece, independently of said first piece.

Said pusher system pushes said pieces towards and beyond said working station WS, so that said pieces are in a correct position to be worked.

The same considerations apply to the case in which the first piece is replaced by a first group of pieces (comprising a plurality of overlapping pieces) and the second piece is replaced by a second group of pieces (comprising a plurality of overlapping pieces between them).

The working station WS is a cutting station and comprises a cutting unit (not shown) for cutting said pieces along a cutting line C, transversal to said forward direction A.

In order to cut said pieces, said cutting unit is movable along said cutting line C.

In general, the cutting unit can cut single pieces arranged side by side or a plurality of groups of pieces, in which the groups of pieces of said plurality of pieces are arranged side by side.

With reference to the sawing machine M shown in figures 1-6, the first piece is arranged between a guiding element GE (a portion of which is visible close to the working station WS), arranged on one side of said support plane SP, and the second piece P2.

Said guiding element extends up to and beyond the working station WS (for a predetermined distance), in correspondence with which the pieces are cut.

In particular, said guiding element GE also serves as an abutment means for the first piece when the latter advances on the support plane SP to reach the working station WS.

In fact, the first piece P1 has at least a portion of a first lateral surface S11 abutting with said guiding element GE and the second lateral surface S12 of said first piece P1 (opposite the first lateral surface S11) contacts at least a portion of a first lateral surface S21 of the second piece P2, placed next to the first piece.

In this way, the first piece P1 is arranged between said guiding element GE and said second piece P2.

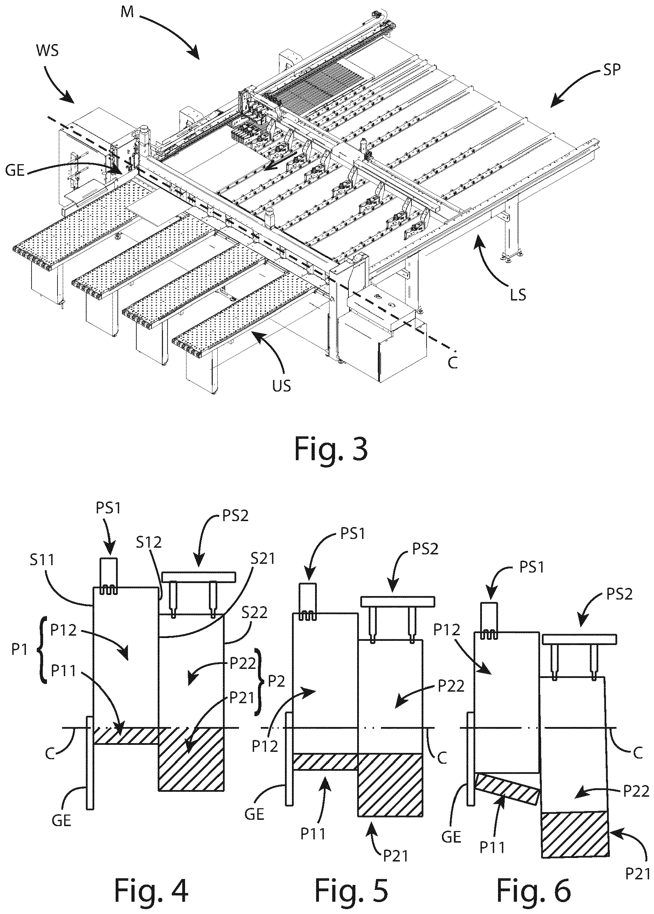

When the first piece P1 and the second piece P2 are cut by the cutting unit of the working station WS, each one of said pieces is divided into a respective first part P11, P21, i.e., the front part of the respective piece with respect to the forward direction A, and in a respective second part P12, P22, i.e., the rear part of the respective piece with respect to the forward direction A (figures 3 and 4).

A disadvantage of said known sawing machine M is given by the fact that, after cutting, if the first piece P1 is stationary and the second piece P2 advances on the support plane SP (pushed by the second group of pushers PS2 of the pushing system), the movement of said second piece P2 (which contacts said first piece P1) causes the rotation of the first part P11 of the first piece P1 on the support plane SP with respect to an edge of said first part P11 of said first piece P1, i.e., the edge of the first part in contact with the guiding element GE (figures 5 and 6).

In fact, said edge finds in a point of the guiding element GE a resting point to rotate on said support plane SP when the second piece P2 advances on the support plane SP.

The rotation of the first part P11 of the first piece P1 can cause damage to the first part itself of the first piece P1 and/or to the second part P22 of the second piece P2, as well as a displacement of the second piece P2 with respect to the forward direction A.

Consequently, a further disadvantage is due to the fact that if the first part P21 and/or the second part P22 of the second piece is/are subjected to a further cut (for example at a further working station), said first part P21 and/or said second part P22 will not be correctly cut.

In fact, the portions of the first part P21 deriving from a further cut on said first part P21 will have a substantially trapezoidal shape.

With reference to the pieces mentioned above, said pieces can be panels made with any material, for example, made of wood, ceramic, plastic, metal, glass, fiberglass.

A sawing machine according to the preamble of claim 1, and a method of using it are known from EP 2 832 507 A1.

### Aim of the invention

The aim of the present invention is to overcome said disadvantages by providing a sawing machine for sawing pieces, the structure of which is designed in such a way that, when a first piece and a second piece are arranged side by side on a support plane and advance along a forward direction to reach a working station for cutting said pieces, the parts of said first piece and/or said second piece, which are cut by said working station, are not damaged and a displacement of the second piece does not occur on the support plane with respect to the forward direction.

Advantageously, it is avoided that, after at least the first piece has been cut and at least a first part and a second part are derived from said cut, the forwarding of the second piece on the support plane causes the rotation of the first part of the first piece on the support plane itself, and that the rotation of said first part causes the second piece to move with respect to the forward direction, so that a further cut of the second piece is not a precise cut.

The same considerations apply to the case in which a first group of pieces (in which the pieces of said first group of pieces are overlapped) and a second group of pieces (in which the pieces of said second group of pieces are overlapped) are arranged side by side, and both groups of pieces move on the support plane along the same forward direction.

### Object of the invention

It is therefore specific object of the present invention a sawing machine for sawing one or more pieces, wherein said sawing machine comprises:
- a support plane for at least a first piece and a second piece, in which said first piece and said second piece are to be positioned side by side,
- a pusher system configured to push said first piece and said second piece independently of each other on said support plane along a forward direction,
- a guiding element, arranged on one side of said support plane, to guide said first piece when said pusher system pushes said first piece, so that said first piece has at least one portion of a first lateral surface in contact with said guiding element and is arranged between said guiding element and said second piece,
- at least one working station comprising:
   a cutting unit for cutting at least said first piece along a cutting line, transversal to said forward direction, so that said first piece is divided into at least a first part and in a second part,
- pushing means for pushing said first part of said first piece in a pushing direction, transversal to the forward direction, so as to move said first part away from said guiding element.

Furthermore, said sawing machine may comprise:
- a logic control unit, connected to said pusher system and to said working station, and configured to:
   o control said pusher system to push said first piece and said second piece on said support plane up to said working station;
   o activate said cutting unit of said working station to cut along said cutting line said first piece in said first part and in said second part;
   o after cutting said first piece, activate said pushing means to push the first part of said first piece and control said pusher system to push said second piece on said support plane.

In particular, said logic control unit may be configured to:
o activate said cutting unit to cut said second piece together with said first piece along said cutting line, so that said second piece is divided into at least a first part and in a second part,
o after cutting said first piece and said second piece, activate said pushing means to move away said first part of said first piece from said guiding element and control said pusher system to push said second piece onto said support plane.

Advantageously, the sawing machine may comprise detection means for detecting the position of said first part of said first piece on said support plane with respect to said guide element and said logic control unit is connected to said detection means and configured to control said pusher system to push said second piece on said support plane only if said first part of said first part does not contact said guiding element.

In particular, said detection means may comprise an optical proximity sensor or an inductive proximity sensor or a magnetic proximity sensor or a capacitive proximity sensor, or a proximity sensor acoustic or radar, or force sensor to measure a force acting on a portion of the support plane.

With reference to said pushing means, said pushing means may be arranged in proximity to said working station.

In particular, said pushing means may be arranged inside said guiding element.

Said pushing means may comprise at least one element movable between a rest position, in which said element is retracted inside said guiding element, and an operating position, in which said element has at least one projecting portion with respect to said guiding element.

Said at least one element may be a pin.

Said sawing machine may be provided with moving means for moving said at least one element, in which said moving means are pneumatic moving means or hydraulic moving means or oleodynamic moving means or electrical moving means.

With reference to said pusher system, said pusher system may comprise:
- a first group of pushers for pushing said first piece, wherein said first group of pushers comprises one or more pushers, and
- a second group of pushers for pushing said second piece, different from said first group of pushers, in which said second group of pushers comprises one or more pushers.

Each of said pushers may comprise an arm and a gripper arranged at one end of said arm.

Further, said sawing machine may comprise a pressing device for clamping each of said pieces on said support plane, wherein said pressing device is coupled to a base of said sawing machine and is movable between a first position, in which each of said pieces is clamped on said support plane, in correspondence with said working station, and a second position, in which each of said pieces is released by said pressing device.

The present invention refers to a method for working one or more pieces by means of a sawing machine, in which said sawing machine comprises a support plane, a guiding element arranged on one side of said support plane, and a working station comprising a cutting unit, said method comprising the following steps:
A) positioning at least a first piece and a second piece on said support plane side by side, so that said first piece has at least one portion of a first lateral surface in contact with said guiding element and is arranged between said guiding element and said second piece,
B) moving said first piece and said second piece on said support plane along a forward direction to said working station,
C) cutting at least said first piece along a cutting line by means of said cutting unit of said working station, so that said first piece is divided into at least a first part and in a second part,
D) pushing said first part of said first piece in a pushing direction transversal with respect to said forward direction, moving the first part of said first piece away from said guiding element, and moving said second piece on said support plane.

Step C may comprise cutting said second piece together with said first piece along said cutting line, so that said second piece is divided in at least a first part and in a second part.

### List of attached drawings

The present invention will be now described, for illustrative but not limitative purposes, according to its preferred embodiments, with particular reference to the figures of the enclosed drawings, wherein:
Figure 1 is a schematic view of a sawing machine according to the prior art, which shows a first panel and a second panel, arranged side by side to said first panel, in which said panels advance on a support plane along a forward direction pushed by a respective pusher group of a pusher system to reach a working station;
Figure 2 is a detail of figure 1, which shows the two panels arranged side by side and their forward direction with respect to the support plane, each of which is pushed by a respective group of pushers;
Figure 3 is a schematic view of a known sawing machine showing the first panel and the second panel in correspondence with the working station (comprising a cutting unit) to be subjected to cutting;
Figure 4 is a schematic view showing the first panel cut and the second panel cut along a cutting line, so that each of said panels is divided into a respective first part and a second part;
Figure 5 is a schematic view showing the first cut panel and the second cut panel, which are both forwarded on the support plane along the forward direction;
Figure 6 is a schematic view showing how, due to the forwarding of the second panel on the support plane, the first part of the first panel rotates on the support plane with respect to the guide element, causing the second panel to be displaced with respect to the forward direction;
Figure 7A is a schematic view of a sawing machine according to the invention, which shows a first panel and a second panel arranged on a support plane in such a way that said first panel is arranged between a guide element (designed to guide said first panel during its movement on the support plane) and said second panel, in which said panels are pushed onto said support plane along a forward direction by a pusher system to reach a working station capable of cutting said panels;
figure 7B shows a detail of the sawing machine concerning the pushing means for moving a first part of the first cut panel away from said guide element, in which said pushing means are arranged inside said guide element, near the working station;
Figure 8 is a schematic view of the working station of the sawing machine of Figure 7A;
Figure 9 is a schematic view showing both panels cut by a cutting unit of the working station along a cutting line, so that each panel is respectively divided into a first part and a second part, as well as the pushing means for pushing the first part of said first cut panel, so as to move it away from said guide element;
Figure 10 is a schematic view showing both the cut panels, which have forwarded on the support plane along the forward direction, pushed by the pusher system, in which the first part of the first panel has been pushed by said push means.

### Detailed description of the invention

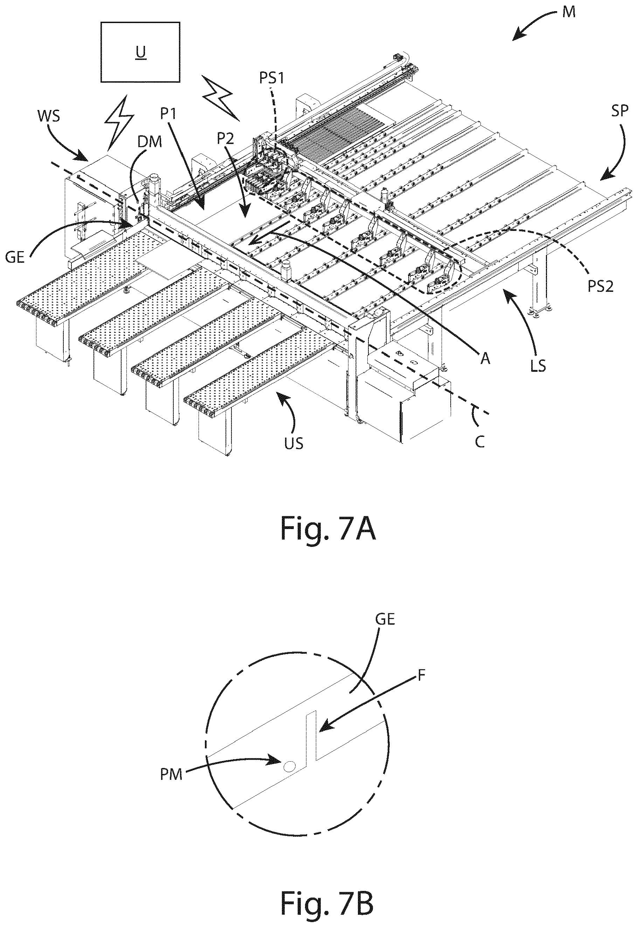

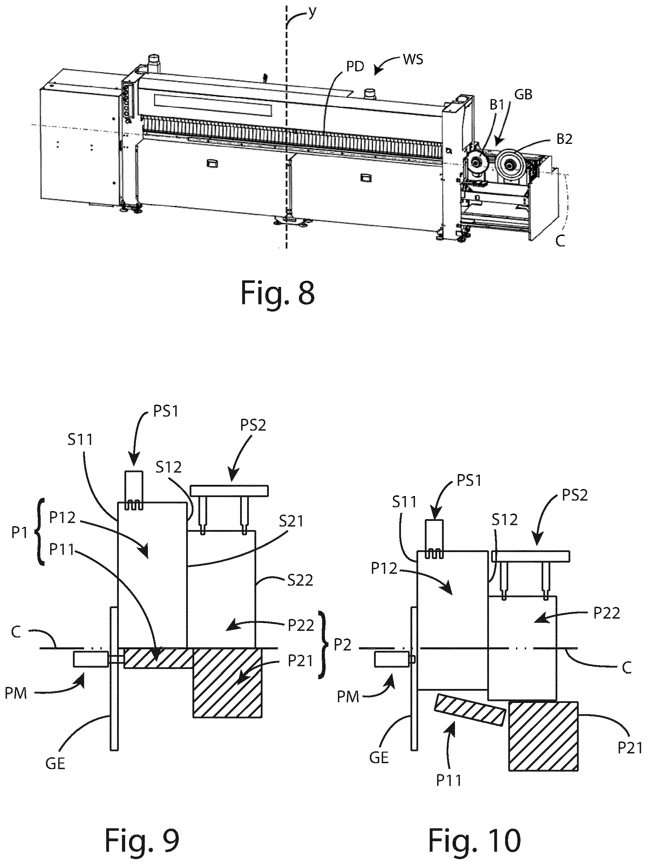

With reference to figures 7A to 10, a sawing machine M for sawing pieces, object of the invention, is described.

Said pieces can be, for example, panels made of wood, ceramic, plastic, metal, glass, fiberglass.

In the embodiment described, said pieces are wooden panels.

In the following, it will be referred to two different pieces: a first piece P1 and a second piece P2.

Said pieces P1, P2 are arranged on the support plane SP, in such a way as to be positioned side by side.

In the embodiment described, said sawing machine M comprises a support plane SP for said pieces, a loading station LS, an unloading station US, and a working station WS, arranged between said loading station LS and said unloading station US.

In particular, the workpieces are pushed onto the support plane SP by a pusher system and move along a forward direction indicated with the reference A, until they reach the working station WS, while the pieces worked by said working station WS reach the unloading station US, and are picked up by an operator or a mechanical arm.

A guiding element GE (a portion of which is visible in proximity to the working station WS) is arranged on one side of said support plane SP and guides said first piece P1 during its forwarding on the support plane SP.

In fact, when the pusher system pushes said first piece P1 on the support plane SP, said first piece P1 has at least a portion of a first lateral surface S11 in contact with said guiding element GE.

Furthermore, since the first piece P1 is also arranged next to the second piece P2, said first piece P1 is arranged between said guiding element GE and said second piece P2.

The working station WS is a cutting station and includes a cutting unit GB for cutting parts.

The cutting of the pieces takes place along a cutting line C defined by a transverse axis (in particular, orthogonal) with respect to the forward direction A of the pieces on the support plane SP.

Furthermore, said working station WS comprises a pressing device PD for clamping one or more pieces on said support plane SP.

Said pressing device PD is coupled to a base of the sawing machine M and is movable between a first position or lower position, in which one or more pieces are clamped on the support plane SP, in correspondence with the working station WS, and a second position or upper position, in which said one or more pieces are released from said pressure device PD.

Said pressing device PD is movable in a first direction or in a second direction (opposite to said first direction) along a Y-axis, which is vertical with respect to the forward direction A of the pieces on the support plane SP, as well as with respect to the cutting line C.

In other words, said sawing machine M comprises:
- a support plane SP for said first piece P1 and said second piece P2, in which said first piece and said second piece are to be positioned side by side,
- a pusher system, configured to push said first piece P1 and said second piece P2 on said support plane SP along a forward direction A,
- a guiding element GE, arranged on one side of said support plane SP, to guide said first piece P1 when said pusher system pushes said first piece P1, so that said first piece P1 has at least a portion of a first lateral surface S11 in contact with said guiding element GE and is arranged between said guiding element GE and said second piece P2,
- at least one working station WS comprising:
   a cutting unit GB for cutting at least said first piece P1 along a cutting line C, transversal to said forward direction A (in particular orthogonal to said forward direction A), so that said first piece P1 is divided into at least a first part P11 and a second part P12.

In particular, according to the invention, said sawing machine M comprises pushing means for pushing said first part P11 of said first piece P1 in a pushing direction D, transversal to the forward direction A (in particular, orthogonal to said forward direction A), so as to move said first part P11 away from said guiding element GE.

With reference to the pusher system, said pusher system is configured to push the second piece P2 on the support plane SP along the forward direction A independently of the first piece P1.

Said pusher system comprises respectively a first group of pushers PS1 to push the first piece P1, and a second group of pushers PS2, different from said first group of pushers PS1, to push at least said second piece P2.

Each of said groups of pushers PS1, PS2 can comprise one or more pushers.

In the embodiment described, each group of pushers PS1, PS2 comprises respectively a first plurality of pushers and a second plurality of pushers.

In particular, in the embodiment that is described, two pushers of said second plurality of pushers push the second piece P2 on the support plane SP.

Independently from the group of pushers, each pusher can comprise an arm provided with a respective gripper for gripping the panel to be worked at one end.

The first piece P1 comprises a first lateral surface S11 (as said) and a second lateral surface S12, opposite to said first lateral surface S11.

The second piece P2 comprises a first lateral surface S21 and a second lateral surface S22, opposite to said first lateral surface S21.

With reference to the arrangement of said pieces on the support plane SP, said first piece P1 has at least a portion of the first lateral surface S11, in contact with the guiding element GE, and the second lateral surface S12, which contacts at least a portion of the first lateral surface S21 of the second piece P2.

In other words, as said, said first piece P1 is arranged between said guiding element GE and said second piece P2.

In particular, in the embodiment described, said first piece P1 has the entire first lateral surface S11 in contact with said guiding element GE, at least until said first piece P1 reaches the working station WS.

With reference to the cutting unit GB of the working station WS, said cutting unit GB comprises a first blade B1, to engrave at least said first piece P1, and a second blade B2, to cut said first piece P1.

As already said, the cut takes place along a cutting line C defined by an axis transversal with respect to the forward direction A.

Furthermore, as already said, the working station WS comprises a pressing device PD for clamping each of said pieces P1, P2 on said support plane SP.

With reference to the parts deriving from the cutting of the first piece P1, in the embodiment described, the first part P11 and the second part P12 of said first piece P1 are respectively the front part and the rear part of the first piece P1 with respect to the forward direction A.

With reference to said pushing means, said pushing means comprise at least one element PM movable between a rest position, in which said element PM is retracted inside said guiding element GE, and an operating position, in which said element PM has at least one projecting portion with respect to said guiding element GE.

In the embodiment described, said pushing means are arranged in proximity to the working station WS.

In particular, said pushing means are arranged inside the guiding element GE.

More specifically, the guiding element GE has a slot S to receive at least the first blade B1 of the cutting unit GB of the working station WS, and said pushing means is arranged inside the guiding element GE in proximity of said slot S.

In the embodiment that is described, said at least one element PM is a pin.

In order to move said pushing means, said sawing machine M is provided with moving means, which can be pneumatic moving means or hydraulic moving means or hydraulic moving means or electric moving means.

In the embodiment described, said moving means are pneumatic moving means and comprise a piston for moving said pin between said rest position and said operating position.

Furthermore, in the embodiment described, said sawing machine M comprises a logic control unit U, connected to said pusher system and to said working station WS, and configured to:
o control said pusher system to push said first piece P1 and said second piece P2 on said support plane SP up to said working station WS;
o activate said cutting unit GB of said working station WS to cut said first piece P1 in said first part P11 and in said second part P12 along said cutting line C;
o after cutting said first piece P1, activate said pushing means PM to push the first part P11 of said first piece P1 and control said pushing system to push said second piece P2 on said support plane SP.

In particular, said control logic unit U is configured to:
o activate said cutting unit GB to cut said second piece P2 together with said first piece P1 along said cutting line C (i.e. the cutting of said second piece P2 is in addition to the cutting of said first piece P1), so that said second piece P2 is divided into at least a first part P21 and a second part P22,
o after cutting said first piece P1 and said second piece P2, activate said pushing means PM to move said first part P11 of said first piece P1 away from said guiding element GE, and control said pusher system to push said second piece P2 on said support plane SP.

It is preferable that said sawing machine M comprises detection means for detecting the position of said first part P11 of said first piece P1 on said support plane SP with respect to said guiding element GE.

By means of said detection means it is possible to check that the first part P11 of the first piece P1 is distant from the guiding element GE (i.e. it no longer contacts said guiding element).

In particular, said logic control unit U can be connected to said detection means DM and is configured to control said pusher system to push said second piece P2 on said support plane SP only if said first part P11 of said first piece P1 is distant from said guiding element GE (i.e. if said first part P11 of said first piece P1 no longer contacts said guiding element GE).

In the embodiment described, said detection means comprise an optical proximity sensor DM.

However, as an alternative to said optical proximity sensor, said detection means can comprise either an inductive proximity sensor, or a magnetic proximity sensor, or a capacitive proximity sensor, or an acoustic proximity sensor, or a radar or a force sensor for measure a force acting on a portion of the support plane.

With reference to the force sensor, said force sensor can be arranged below the support plane itself, in proximity of a portion of the guide element, inside which said pushing means are arranged. The present invention also refers to a method for working one or more pieces by means of a sawing machine M, in which said sawing machine M comprises a support plane SP, a guiding element GE, arranged on one side of said surface support SP, and a working station WS comprising a cutting unit GB.

This method comprises the following steps:
A) positioning at least a first piece P1 and a second piece P2 on said support plane SP, side by side, in such a way that said first piece P1 has at least a portion of a first lateral surface S11 in contact with said element guide GE, and is arranged between said guiding element GE and said second piece P2,
B) moving said first piece P1 and said second piece P2 on said support plane SP along the forward direction A up to said working station WS,
C) cutting at least said first piece P1 along a cutting line C by means of said cutting unit GB of said working station WS, so that said first piece P1 is divided into at least a first part P11 and a second part P12,
D) pushing said first part P11 of said first piece P1 in a pushing direction D, transversal with respect to said forward direction A (in particular orthogonal to said forward direction), moving the first part P11 of said first piece P1 away from said guiding element GE, and moving said second piece P2 on said support plane SP.

In particular, step C can comprise cutting the second piece P2 along said cutting line C, as well as cutting said first piece P1, so that said second piece P2 is divided at least into a first part P21 and a second part P22.

### Advantages

Advantageously, by means of the sawing machine object of the present invention, it is possible to move a first part of a first cut panel away from a guiding element (designed to guide said first panel during movement on the support plane), which is part of said sawing machine to avoid that said first part rotates, causing a damage to the second panel, arranged alongside said first panel, and/or to said first part of said first panel, as well as a displacement of the second panel with respect to the forward direction.

The present invention has been described for illustrative but not limitative purposes, according to its preferred embodiments, but it is to be understood that modifications and/or changes can be introduced by those skilled in the art without departing from the scope as defined in the enclosed claims.

## Claims

1. Sawing machine (M) for sawing one or more pieces (P1,P2), said sawing machine (M) comprising:
- a support plane (SP) for at least a first piece (P1) and a second piece (P2), in which said first piece (P1) and said second piece (P2) are to be positioned side by side,
- a pusher system (PS1, PS2) configured to push said first piece (P1) and said second piece (P2) independently of each other on said support plane (SP) along a forward direction (A),
- a guiding element (GE), arranged on one side of said support plane (SP), to guide said first piece (P1) when said pusher system (SP1, SP2) pushes said first piece (P1), so that said first piece (P1) has at least one portion of a first lateral surface (S11) in contact with said guiding element (GE) and is arranged between said guiding element (GE) and said second piece (P2),
- at least one working station (WS) comprising:
a cutting unit (GB) for cutting at least said first piece (P1) along a cutting line (C), transversal to said forward direction (A), so that said first piece (P1) is divided into at least a first part (P11) and in a second part (P12), **characterized by**
- pushing means (PM) for pushing said first part (P11) of said first piece (P1) in a pushing direction (D), transversal to the forward direction (A), so as to move said first part (P11) away from said guiding element (GE).

2. Sawing machine (M) according to the previous claim, **characterized in that** said sawing machine (M) comprises:
- a logic control unit (U), connected to said pusher system (PS1, PS2) and to said working station (WS), and configured to:
o control said pusher system (PS1, PS2) to push said first piece (P1) and said second piece (P2) on said support plane (SP) up to said working station (WS);
o activate said cutting unit (GB) of said working station (WS) to cut along said cutting line (C) said first piece (P1) in said first part (P11) and in said second part (P12);
∘ after cutting said first piece (P1), activate said pushing means (PM) to push the first part (P11) of said first piece (P1) and control said pusher system (PS1, PS2) to push said second piece (P2) on said support plane (SP).

3. Sawing machine (M) according to claim 2, **characterized in that** said logic control unit (U) is configured to:
o activate said cutting unit (GB) to cut said second piece (P2) together with said first piece (P1) along said cutting line (C), so that said second piece (P2) is divided into at least a first part (P21) and in a second part (P21),
o after cutting said first piece (P1) and said second piece (P2), activate said pushing means (PM) to move said first part (P11) of said first piece (P1) away from said guiding element (GE) and control said pusher system (PS1, PS2) to push said second piece (P2) on said support plane (SP).

4. Sawing machine (M) according to any one of previous claim, **characterized**
**in that**
said sawing machine (M) comprises detection means (DM) for detecting the position of said first part (P11) of said first piece (P1) on said support plane (SP) with respect to said guide element (GE),
**in that**
said logic control unit (U) is connected to said detection means (DM) and configured to control said pusher system (PS1, PS2) to push said second piece (P2) on said support plane (SP) only if said first part (P11) of said first part (P1) does not contact said guiding element (GE).

5. Sawing machine (M) according to the previous claim, **characterized in that** said detection means (DM) comprise an optical proximity sensor or an inductive proximity sensor or a magnetic proximity sensor or a capacitive proximity sensor or a proximity sensor acoustic or radar or force sensor to measure a force acting on a portion of the support plane (SP).

6. Sawing machine (M) according to any one of the previous claims, **characterized in that** said pushing means (PM) are arranged in proximity to said working station (WS).

7. Sawing machine (M) according to any one of the previous claims, **characterized in that** said pushing means (PM) are arranged inside said guiding element (GE).

8. Sawing machine (M) according to any one of the previous claims, **characterized in that** said pushing means (PM) comprise at least one element (PM) movable between a rest position, in which said element (PM) is retracted inside said guiding element (GE), and an operating position, in which said element (PM) has at least one projecting portion with respect to said guiding element (GE).

9. Sawing machine (M) according to the previous claim, **characterized in that** said at least one element (PM) is a pin.

10. Sawing machine (M) according to the claim 8 or 9, **characterized in that** said sawing machine (M) is provided with moving means for moving said at least one element (PM), in which said moving means are pneumatic moving means or hydraulic moving means or oleodynamic moving means or electrical moving means.

11. Sawing machine (M) according to any one of the previous claims, **characterized in that** said pusher system (PS1, PS2) comprises:
- a first group of pushers (PS1) for pushing said first piece (P1), wherein said first group of pushers (PS1) comprises one or more pushers, and
- a second group of pushers (PS2) for pushing said second piece (P2), different from said first group of pushers, in which said second group of pushers (PS2) comprises one or more pushers.

12. Sawing machine (M) according to the previous claim, **characterized in that** each pusher comprises an arm and a gripper arranged at one end of said arm.

13. Sawing machine (M) according to any one of the previous claims, **characterized in that** said sawing machine (M) comprises a pressing device (PD) for clamping each of said pieces (P1, P2) on said support plane (SP), wherein said pressing device (PD) is coupled to a base of said sawing machine and is movable between a first position, in which each said pieces is clamped on said support plane (SP), in correspondence with said working station (WS), and a second position, in which each said pieces (P1, P2) is released by said pressing device (PD).

14. Method for working one or more pieces (P1, P2) by means of a sawing machine (M), in which said sawing machine (M) comprises a support plane (SP), a guiding element (GE) arranged on one side of said support plane (SP) and a working station (WS) comprising a cutting unit (GB), said method comprising the following steps:
A) positioning at least a first piece (P1) and a second piece (P2) on said support plane (SP) side by side, so that said first piece (P1) has at least one portion of a first lateral surface (S11) in contact with said guiding element (GE) and is arranged between said guiding element (GE) and said second piece (P2),
B) moving said first piece (P1) and said second piece (P2) on said support plane (SP) along a forward direction (A) to said working station (WS),
C) cutting at least said first piece (P1) along a cutting line (C) by means of said cutting unit (GB) of said working station (WS), so that said first piece (P1) is divided into at least a first part (P11) and in a second part (P12), said method being **characterized by**
D) pushing said first part (P11) of said first piece (P1) in a pushing direction (D), transversal with respect to said forward direction (A), moving the first part (P11) of said first piece (P1) away from said guiding element (GE), and moving said second piece (P2) on said support plane (SP).

15. Method according to the previous claim, **characterized in that** step C comprises cutting said second piece (P2) together with said first piece (P1) along said cutting line (C), so that said second piece (P2) is divided in at least a first part (P21) and in a second part (P22).

## Patentansprüche

1. Sägemaschine (M) zum Sägen eines oder mehrerer Stücke (P1,P2), wobei die Sägemaschine (M) umfasst:
- eine Auflageebene (SP) für mindestens ein erstes Teil (P1) und ein zweites Teil (P2), in der das erste Teil (P1) und das zweite Teil (P2) nebeneinander zu positionieren sind,
- ein Schiebesystem (PS1, PS2), das so konfiguriert ist, dass es das erste Teil (P1) und das zweite Teil (P2) unabhängig voneinander auf der Stützebene (SP) entlang einer Vorwärtsrichtung (A) drückt,
- ein Führungselement (GE), das auf einer Seite der Stützebene (SP) angeordnet ist, um das erste Stück (P1) zu führen, wenn das Schiebesystem (SP1, SP2) das erste Stück (P1) drückt, so dass das erste Stück (P1) mindestens einen Abschnitt einer ersten Seitenfläche (S11) in Kontakt mit dem Führungselement (GE) aufweist und zwischen dem Führungselement (GE) und dem zweiten Teil (P2) angeordnet ist,
- mindestens eine Arbeitsstation (WS), bestehend aus: eine Schneideinheit (GE) zum Schneiden mindestens des ersten Stücks (P1) entlang einer Schnittlinie (C), quer zur Vorwärtsrichtung (A), so dass das erste Stück (P1) in mindestens einen ersten Teil geteilt wird (P11) und in einem zweiten Teil (P12), **gekennzeichnet durch**
- schubmittel (PM) zum Drücken des ersten Teils (P11) des ersten Teils (P1) in einer Schubrichtung (D), quer zur Vorwärtsrichtung (A), um so den ersten Teil (P11) davon weg zu bewegen besagtes Führungselement (GE).

2. Sägemaschine (M) nach dem vorherigen Anspruch, **dadurch gekennzeichnet, dass** die Sägemaschine (M) umfasst:
- eine logische Steuereinheit (U), die mit dem Schiebersystem (PS1, PS2) und der Arbeitsstation (WS) verbunden und konfiguriert ist für:
o das Schiebesystem (PS1, PS2) steuern, um das erste Teil (P1) und das zweite Teil (P2) auf der Stützebene (SP) bis zur Arbeitsstation (WS) zu schieben;
o die Schneideinheit (GB) der Arbeitsstation (WS) aktivieren, um entlang der Schneidlinie (C) das erste Stück (P1) in den ersten Teil (P11) und in den zweiten Teil (P12) zu schneiden;
o aktivieren Sie nach dem Schneiden des ersten Stücks (P1) die Schiebeeinrichtung (PM), um den ersten Teil (P11) des ersten Stücks (P1) zu schieben, und steuern Sie das Schiebesystem (PS1, PS2), um das zweite Stück (P2) zu schieben. auf der Trägerebene (SP).

3. Sägemaschine (M) nach Anspruch 2, **dadurch gekennzeichnet, dass** die Logiksteuereinheit (U) konfiguriert ist für:
o die Schneideinheit (GB) aktivieren, um das zweite Stück (P2) zusammen mit dem ersten Stück (P1) entlang der Schnittlinie (C) zu schneiden, so dass das zweite Stück (P2) in mindestens einen ersten Teil (P21) geteilt wird und in einem zweiten Teil (P21),
o nach dem Schneiden des ersten Teils (P1) und des zweiten Teils (P2) die Schiebeeinrichtung (PM) aktivieren, um den ersten Teil (P11) des ersten Teils (P1) vom Führungselement (GE) wegzubewegen und zu steuern Schiebesystem (PS1, PS2), um das zweite Teil (P2) auf die Stützebene (SP) zu schieben.

4. Sägemaschine (M) nach einem der vorhergehenden Ansprüche, **dadurch gekennzeichnet, dass** die Sägemaschine (M) Erfassungsmittel (DM) zum Erfassen der Position des ersten Teils (P11) des ersten Teils (P1) auf diesem umfasst Stützebene (SP) in Bezug auf das Führungselement (GE), indem die logische Steuereinheit (U) mit dem Erfassungsmittel (DM) verbunden und so konfiguriert ist, dass sie das Schiebesystem (PS1, PS2) steuert, um das zweite Teil zu schieben (P2) auf der Stützebene (SP) nur dann, wenn der erste Teil (P11) des ersten Teils (P1) das Führungselement (GE) nicht berührt.

5. Sägemaschine (M) nach dem vorherigen Anspruch, **dadurch gekennzeichnet, dass** die Erfassungsmittel (DM) einen optischen Näherungssensor oder einen induktiven Näherungssensor oder einen magnetischen Näherungssensor oder einen kapazitiven Näherungssensor oder einen akustischen oder Radar- oder Näherungssensor umfassen Kraftsensor zur Messung einer auf einen Teil der Stützebene (SP) wirkenden Kraft.

6. Sägemaschine (M) nach einem der vorhergehenden Ansprüche, **dadurch gekennzeichnet, dass** die Schiebemittel (PM) in der Nähe der Arbeitsstation (WS) angeordnet sind.

7. Sägemaschine (M) nach einem der vorhergehenden Ansprüche, **dadurch gekennzeichnet, dass** die Schubmittel (PM) innerhalb des Führungselements (GE) angeordnet sind.

8. Sägemaschine (M) nach einem der vorhergehenden Ansprüche, **dadurch gekennzeichnet, dass** die Schubmittel (PM) mindestens ein Element (PM) umfassen, das zwischen einer Ruheposition, in der das Element (PM) in das Innere zurückgezogen ist, bewegbar ist Führungselement (GE) und einer Betriebsposition, in der das Element (PM) mindestens einen vorstehenden Abschnitt in Bezug auf das Führungselement (GE) aufweist.

9. Sägemaschine (M) nach dem vorherigen Anspruch, **dadurch gekennzeichnet, dass** das mindestens ein Element (PM) ein Stift ist.

10. Sägemaschine (M) nach Anspruch 8 oder 9, **dadurch gekennzeichnet, dass** die Sägemaschine (M) mit Bewegungsmitteln zum Bewegen des mindestens einen Elements (PM) ausgestattet ist, wobei die Bewegungsmittel pneumatische Bewegungsmittel oder sind hydraulische Bewegungsmittel oder oleodynamische Bewegungsmittel oder elektrische Bewegungsmittel.

11. Sägemaschine (M) nach einem der vorhergehenden Ansprüche, **dadurch gekennzeichnet, dass** das Schiebersystem (PS1, PS2) umfasst:
- eine erste Gruppe von Drückern (PS1) zum Drücken des ersten Teils (P1), wobei die erste Gruppe von Drückern (PS1) einen oder mehrere Drücker umfasst, und
- eine zweite Gruppe von Drückern (PS2) zum Drücken des zweiten Teils (P2), die sich von der ersten Gruppe von Drückern unterscheidet, wobei die zweite Gruppe von Drückern (PS2) einen oder mehrere Drücker umfasst.

12. Sägemaschine (M) nach dem vorherigen Anspruch, **dadurch gekennzeichnet, dass** jeder Schieber einen Arm und einen an einem Ende des Arms angeordneten Greifer umfasst.

13. Sägemaschine (M) nach einem der vorhergehenden Ansprüche, **dadurch gekennzeichnet, dass** die Sägemaschine (M) eine Pressvorrichtung (PD) zum Festklemmen jedes der Teile (P1, P2) auf der Trägerebene (SP) umfasst, wobei die Pressvorrichtung (PD) mit einer Basis der Sägemaschine gekoppelt ist und zwischen einer ersten Position, in der jedes der Stücke auf der Trägerebene (SP) festgeklemmt ist, und der Arbeitsstation (WS) bewegbar ist. und eine zweite Position, in der jedes der Stücke (P1, P2) durch die Pressvorrichtung (PD) freigegeben wird.

14. Verfahren zur Bearbeitung eines oder mehrerer Werkstücke (P1, P2) mittels einer Sägemaschine (M), bei dem die Sägemaschine (M) eine Auflageebene (SP), ein einseitig angeordnetes Führungselement (GE) umfasst der Auflageebene (SP) und einer Arbeitsstation (WS), die eine Schneideinheit (GE) umfasst, wobei das Verfahren die folgenden Schritte umfasst:
A) Positionieren mindestens eines ersten Teils (P1) und eines zweiten Teils (P2) nebeneinander auf der Stützebene (SP), so dass das erste Teil (P1) mindestens einen Abschnitt einer ersten Seitenfläche (S11) aufweist. in Kontakt mit dem Führungselement (GE) und zwischen dem Führungselement (GE) und dem zweiten Teil (P2) angeordnet ist,
B) Bewegen des ersten Teils (P1) und des zweiten Teils (P2) auf der Stützebene (SP) entlang einer Vorwärtsrichtung (A) zur Arbeitsstation (WS),
C) Schneiden mindestens des ersten Stücks (P1) entlang einer Schnittlinie (C) mittels der Schneideinheit (GB) der Arbeitsstation (WS), so dass das erste Stück (P1) in mindestens ein erstes Stück geteilt wird Teil (P11) und in einem zweiten Teil (P12), wobei das Verfahren **gekennzeichnet ist durch**
D) Drücken des ersten Teils (P11) des ersten Teils (P1) in einer Schubrichtung (D), quer zur Vorwärtsrichtung (A), wodurch der erste Teil (P11) des ersten Teils (P1) wegbewegt wird vom Führungselement (GE) und Bewegen des zweiten Teils (P2) auf der Stützebene (SP).

15. Verfahren nach dem vorherigen Anspruch, **dadurch gekennzeichnet, dass** Schritt C das Schneiden des zweiten Teils (P2) zusammen mit dem ersten Teil (P1) entlang der Schnittlinie (C) umfasst, so dass das zweite Teil (P2) in zwei Teile geteilt wird mindestens einem ersten Teil (P21) und in einem zweiten Teil (P22).

## Revendications

1. Machine à scier (M) pour scier une ou plusieurs pièces (P1,P2), ladite machine à scier (M) comprenant:
- un plan d'appui (SP) pour au moins une première pièce (P1) et une deuxième pièce (P2), dans lequel ladite première pièce (P1) et ladite deuxième pièce (P2) sont destinées à être positionnées côte à côte,
- un système poussoir (PS1, PS2) configuré pour pousser ladite première pièce (P1) et ladite deuxième pièce (P2) indépendamment l'une de l'autre sur ledit plan support (SP) selon une direction avant (A),
- un élément de guidage (GE), disposé d'un côté dudit plan support (SP), pour guider ladite première pièce (P1) lorsque ledit système poussoir (SP1, SP2) pousse ladite première pièce (P1), de sorte que ladite première pièce (P1) présente au moins une partie d'une première surface latérale (S11) en contact avec ledit élément de guidage (GE) et est disposée entre ledit élément de guidage (GE) et ladite seconde pièce (P2),
- au moins un poste de travail (WS) comprenant: une unité de coupe (GB) pour couper au moins ladite première pièce (P1) le long d'une ligne de coupe (C), transversale à ladite direction avant (A), de sorte que ladite première pièce (P1) soit divisée en au moins une première partie (P11) et dans une deuxième partie (P12), **caractérisé par**
- des moyens de poussée (PM) pour pousser ladite première partie (P11) de ladite première pièce (P1) dans une direction de poussée (D), transversale à la direction avant (A), de manière à éloigner ladite première partie (P11) dudit élément de guidage (GE).

2. Machine à scier (M) selon la revendication précédente, **caractérisée en ce que** ladite machine à scier (M) comprend:
- une unité logique de contrôle (U), reliée audit système poussoir (PS1, PS2) et audit poste de travail (WS), et configurée pour:
∘ commander ledit système poussoir (PS1, PS2) pour pousser ladite première pièce (P1) et ladite deuxième pièce (P2) sur ledit plan support (SP) jusqu'audit poste de travail (WS);
∘ activer ladite unité de coupe (GB) dudit poste de travail (WS) pour couper le long de ladite ligne de coupe (C) ladite première pièce (P1) dans ladite première partie (P11) et dans ladite deuxième partie (P12);
o après avoir découpé ladite première pièce (P1), activer lesdits moyens de poussée (PM) pour pousser la première partie (P11) de ladite première pièce (P1) et commander ledit système de poussée (PS1, PS2) pour pousser ladite deuxième pièce (P2) sur ledit plan support (SP).

3. Machine à scier (M) selon la revendication 2, **caractérisée en ce que** ladite unité logique de contrôle (U) est configurée pour:
∘ activer ladite unité de coupe (GB) pour couper ladite deuxième pièce (P2) conjointement avec ladite première pièce (P1) le long de ladite ligne de coupe (C), de sorte que ladite deuxième pièce (P2) soit divisée en au moins une première partie (P21) et dans une deuxième partie (P21),
o après avoir découpé ladite première pièce (P1) et ladite deuxième pièce (P2), activer lesdits moyens de poussée (PM) pour éloigner ladite première partie (P11) de ladite première pièce (P1) dudit élément de guidage (GE) et commander ledit système de poussoir (PS1, PS2) pour pousser ladite deuxième pièce (P2) sur ledit plan support (SP).

4. Machine à scier (M) selon l'une quelconque des revendications précédentes, **caractérisée en ce que** ladite machine à scier (M) comprend des moyens de détection (DM) pour détecter la position de ladite première partie (P11) de ladite première pièce (P1) sur ledit plan support (SP) par rapport audit élément de guidage (GE), **en ce que** ladite unité logique de commande (U) est connectée auxdits moyens de détection (DM) et configurée pour commander ledit système poussoir (PS1, PS2) pour pousser ladite seconde pièce (P2) sur ledit plan support (SP) uniquement si ladite première partie (P11) de ladite première partie (P1) n'entre pas en contact avec ledit élément de guidage (GE).

5. Machine à scier (M) selon la revendication précédente, **caractérisée en ce que** lesdits moyens de détection (DM) comprennent un capteur de proximité optique ou un capteur de proximité inductif ou un capteur de proximité magnétique ou un capteur de proximité capacitif ou un capteur de proximité acoustique ou radar ou capteur de force pour mesurer une force agissant sur une partie du plan support (SP) .

6. Machine à scier (M) selon l'une quelconque des revendications précédentes, **caractérisée en ce que** lesdits moyens de poussée (PM) sont disposés à proximité dudit poste de travail (WS).

7. Machine à scier (M) selon l'une quelconque des revendications précédentes, **caractérisée en ce que** lesdits moyens de poussée (PM) sont disposés à l'intérieur dudit élément de guidage (GE).

8. Machine à scier (M) selon l'une quelconque des revendications précédentes, **caractérisée en ce que** lesdits moyens de poussée (PM) comprennent au moins un élément (PM) mobile entre une position de repos, dans laquelle ledit élément (PM) est escamoté à l'intérieur dudit élément de guidage (GE), et une position de fonctionnement, dans laquelle ledit élément (PM) présente au moins une partie en saillie par rapport audit élément de guidage (GE).

9. Machine à scier (M) selon la revendication précédente, **caractérisée en ce que** ledit au moins un élément (PM) est une goupille.

10. Machine à scier (M) selon la revendication 8 ou 9, **caractérisée en ce que** ladite machine à scier (M) est munie de moyens de déplacement pour déplacer ledit au moins un élément (PM), dans lesquels lesdits moyens de déplacement sont des moyens de déplacement pneumatiques ou des moyens de déplacement hydrauliques ou des moyens de déplacement oléodynamiques ou des moyens de déplacement électriques.

11. Machine à scier (M) selon l'une quelconque des revendications précédentes, **caractérisée en ce que** ledit système poussoir (PS1, PS2) comprend:
- un premier groupe de poussoirs (PS1) pour pousser ladite première pièce (P1), dans lequel ledit premier groupe de poussoirs (PS1) comprend un ou plusieurs poussoirs, et
- un deuxième groupe de poussoirs (PS2) pour pousser ladite deuxième pièce (P2), différent dudit premier groupe de poussoirs, dans lequel ledit deuxième groupe de poussoirs (PS2) comprend un ou plusieurs poussoirs.

12. Machine à scier (M) selon la revendication précédente, **caractérisée en ce que** chaque poussoir comprend un bras et une pince disposée à une extrémité dudit bras.

13. Machine à scier (M) selon l'une quelconque des revendications précédentes, **caractérisée en ce que** ladite machine à scier (M) comprend un dispositif de pressage (PD) pour serrer chacune desdites pièces (P1, P2) sur ledit plan support (SP), dans lequel ledit dispositif de pressage (PD) est couplé à une base de ladite machine à scier et est mobile entre une première position, dans laquelle chacune desdites pièces est serrée sur ledit plan support (SP), en correspondance avec ledit poste de travail (WS), et une deuxième position, dans laquelle chacune desdites pièces (P1, P2) est libérée par ledit dispositif de pressage (PD).

14. Procédé pour usiner une ou plusieurs pièces (P1, P2) au moyen d'une machine à scier (M), dans lequel ladite machine à scier (M) comprend un plan d'appui (SP), un élément de guidage (GE) disposé d'un côté dudit plan support (SP) et un poste de travail (WS) comprenant une unité de coupe (GB), ledit procédé comprenant les étapes suivantes:
A) positionner côte à côte au moins une première pièce (P1) et une deuxième pièce (P2) sur ledit plan support (SP), de sorte que ladite première pièce (P1) présente au moins une portion d'une première surface latérale (S11), en contact avec ledit élément de guidage (GE) et est disposé entre ledit élément de guidage (GE) et ladite deuxième pièce (P2),
B) déplacer ladite première pièce (P1) et ladite seconde pièce (P2) sur ledit plan support (SP) le long d'une direction vers l'avant (A) jusqu'audit poste de travail (WS),
C) couper au moins ladite première pièce (P1) le long d'une ligne de coupe (C) au moyen de ladite unité de coupe (GB) dudit poste de travail (WS), de sorte que ladite première pièce (P1) soit divisée en au moins une première partie (P11) et dans une deuxième partie (P12), ledit procédé étant **caractérisé par**
D) pousser ladite première partie (P11) de ladite première pièce (P1) dans une direction de poussée (D), transversale par rapport à ladite direction avant (A), éloigner la première partie (P11) de ladite première pièce (P1) depuis ledit élément de guidage (GE), et déplacer ladite seconde pièce (P2) sur ledit plan support (SP).

15. Procédé selon la revendication précédente, **caractérisé en ce que** l'étape C comprend la découpe de ladite deuxième pièce (P2) conjointement avec ladite première pièce (P1) le long de ladite ligne de découpe (C), de sorte que ladite deuxième pièce (P2) soit divisée en au moins une première partie (P21) et en une deuxième partie (P22).
